# EUROPEAN PATENT SPECIFICATION

(11) **EP 3 445 553 B1**
(45) Date of publication and mention of the grant of the patent: **14.07.2021**
(21) Application number: 16730508.5
(22) Date of filing: 20.04.2016
(51) Int. Cl.: B29B 17/00, B29B 11/08

(54) **A PREFORM MANUFACTURING DEVICE**
VORFORMLINGHERSTELLUNGSANLAGE
INSTALLATION POUR LA FABRICATION DE PARISONS

(43) Date of publication of application: 27.02.2019
(73) Proprietor: Suntory Holdings Limited, Osaka-shi, Osaka 530-8203 (JP); S.I.P.A. Societa' Industrializzazione Progettazione Automazione - S.P.A., 31029 Vittorio Veneto Treviso (IT); EREMA Engineering Recycling Maschinen und Anlagen Gesellschaft m.b.H., 4052 Ansfelden (AT); Kyoei Industry Co., Ltd., Oyama-shi, Tochigi 323-0027 (JP)
(72) Inventor: GRIBAUDO, Enrico, 31029 Vittorio Veneto (IT); FEICHTINGER, Klaus, 4040 Linz (AT); HACKL, Manfred, 4040 Linz-Urfahr (AT); WOESS, Christoph, 4081 Hartkirchen (AT); FURUSAWA, Eiichi, Oyama-shi Tochigi 323-0807 (JP); TAKADA, Munehiko, Tokyo 135-0091 (JP); KISHI, Shigenobu, Tokyo 135-0091 (JP); SAITO, Yoshihiro, Tokyo 135-0091 (JP); OGASAWARA, Naoya, Tokyo 135-0091 (JP)
(74) Representative: Studio Torta S.p.A.
(86) International application number: PCT/IT2016/000098
(87) International publication number: WO 2017/183048

(56) References cited:
- EP-A1- 2 447 033
- EP-A1- 2 447 036
- WO-A1-2009/100473
- WO-A1-2010/144994
- WO-A2-2014/111902
- CA-A1- 2 033 493
- US-A- 3 804 811
- US-A1- 2005 194 705
- US-A1- 2011 198 768
- US-A1- 2015 251 343
- N N: "Viscotec - Food grade PCR PET", INTERNET CITATION, 6 October 2010 (2010-10-06), pages 1-4, XP002666474, Retrieved from the Internet: URL:http://www.viscotec.at/assets/Uploads/ Dokumente/ViscotecPETFolderG2X 1a.pdf [retrieved on 2011-12-28]
- MÜLLER K ET AL: "PET in der Getränkeverpackung", KUNSTSTOFFE, CARL HANSER VERLAG, MUNCHEN, DE , 31 October 2005 (2005-10-31), pages 120-125, XP002666477, ISSN: 0023-5563 Retrieved from the Internet: URL:http://www.kunststoffe.de/directlink.a sp?KU103367 [retrieved on 2011-12-28]
- FIRAS AWAJA, DUMITRU PAVEL: "recycling of PET", EUROPEAN POLYMER JOURNAL, vol. 41, no. 5, 16 March 2005 (2005-03-16) , pages 1453-1477, XP002766189, DOI: 10.1016/j.eurpolymj.2005.02.005

## Description

### [Technical Field]

The present invention relates a preform manufacturing device for manufacturing a preform for a plastic bottle from thermoplastic resin flakes such as PET flakes.

### [Background Art]

A plastic bottle such as plastic container, etc., made of polyethylene terephthalate (PET) is widely used to contain food and liquid for drinking. The plastic bottle is shaped by blowing up a preform having the shape such as a test tube by a stretch blow molding method.

Recently, recycle of a plastic bottle which is manufactured from a used plastic bottle, has been carried out. In particular, in order to recycle a used plastic bottle as a plastic bottle for liquid for drinking, food, etc., completely removing foreign matter in the plastic bottle is important so that it can be safely used by a customer.

For example, as described in PTL 1, a chemical recycle method and a mechanical recycle method are known as a decontamination method. In the chemical recycle method and mechanical recycle method, first, resin flakes are produced by shattering and washing a collected used plastic bottle. After that, in the chemical recycle method, depolymerization reaction of the resin flakes is carried out in order to decompose the resin flakes into raw materials or intermediate materials of the resin, and the decomposed resin is purified and repolymerization is carried out in order to carry out decontamination. On the other hand, in the mechanical recycle method, impure substances contained in the resin flakes are volatilized at high temperature in order to carry out decontamination. Compared to the chemical recycle method, the mechanical recycle method can reduce necessary equipment, and therefore it can reduce manufacturing costs and environmental load.

### [Citation List]

### [Patent Literature]

[PTL 1] Japanese Patent Publication No. 2014-198422A
[PTL 2] US 2011/198768
[PTL 3] EP 2 447 036
[PTL 4] WO 2010/144994
[PTL 5] WO 2009/100473
[PTL 6] US 2015/251343
[PTL 7] CA 2 033 493
[PTL 8] US 2005/194705
[PTL 9] EP 2 447 033

### [Summary of Invention]

### [Technical Problem]

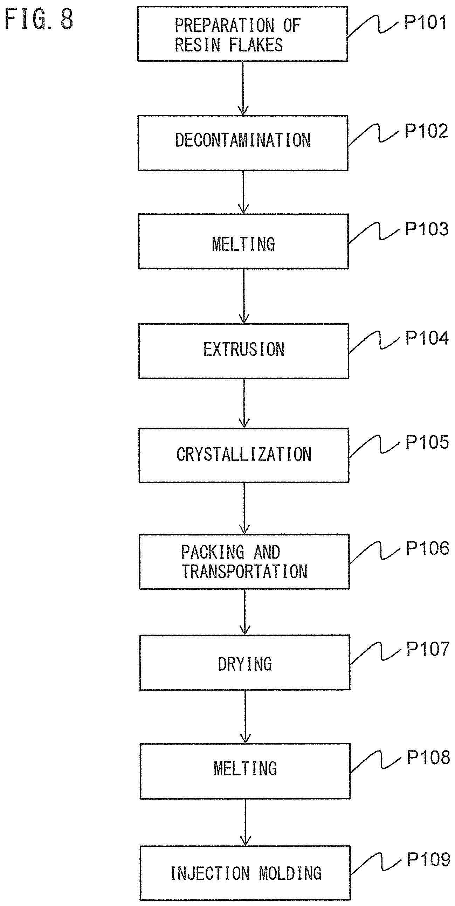

FIG. 8 shows a part of a recycle process of a plastic bottle, wherein a mechanical recycle method is used, according to prior art. In the shown recycle process, a preform is manufactured using resin flakes produced from a used plastic bottle.

In a step P101, resin flakes are prepared. The resin flakes are produced by shattering and washing a used plastic bottle. In a step P102, the resin flakes are decontaminated at high temperature by a decontamination apparatus. In a step P103, the decontaminated resin is melted in the decontamination apparatus. In a step P104, the melted resin is extruded from the decontamination apparatus. At this time, foreign matter in the resin is removed by passing the resin through a filter. In a step P105, the extruded amorphous resin is heated up to high temperature (about 220 degrees Celsius) and is crystallized. In a step P106, the crystalized resin is packed and transported. In a step P107, the transported crystalized resin is dried at about 160 degrees Celsius. In a step P108, the dried crystalized resin is melt for injection molding. In other words, the crystalized resin is plasticized. In a step P109, a preform is manufactured by injecting and molding the plasticized resin with an injection molding apparatus.

As mentioned above, in the prior recycle process, the amorphous resin extruded from the decontamination apparatus is crystalized for transportation and introduction into the injection molding apparatus. Further, drying the crystalized resin after transporting it is necessary in order to prevent hydrolysis of the crystalized resin, since the crystalized resin absorbs moisture during the transportation. Accordingly, there were many steps necessary to manufacture a preform from resin flakes, and therefore enhancing productivity and quality of a preform was challenging.

The present invention was made in consideration of the above situation and has an object of enhancing productivity and quality of a preform, in a recycle process of a plastic bottle, wherein a mechanical recycle method is used.

### [Solution to Problem]

As a result of intensive research, the present inventors conceived of integrating a decontamination apparatus and an injection molding apparatus and completed the present invention by focusing attention on that a resin has been melted in the step of extruding a decontaminated resin from the decontamination apparatus and the step of injecting a resin into a mold of the injection molding apparatus.

In order to solve the above problem, there is provided a preform manufacturing device for manufacturing a preform from thermoplastic resin flakes, the preform manufacturing device comprises: a decontamination apparatus removing contaminants in the thermoplastic resin flakes, and an injection molding apparatus injecting and molding the thermoplastic resin supplied from the decontamination apparatus, and the injection molding apparatus comprises a plurality of molds and continuously shapes preforms; the preform manufacturing device further comprising a filter disposed between the decontamination apparatus and the injection molding apparatus, characterized in that a gear pump is disposed between the filter and the injection molding apparatus.

According to another feature , the injection molding apparatus is a rotary type injection molding apparatus comprising a rotary mechanism rotating the plurality of molds.

### [Advantageous Effects of Invention]

According to the present invention, it is possible to enhance productivity and quality of a preform, in a recycle process of a plastic bottle, wherein a mechanical recycle method is used.

### [Brief Description of Drawings]

[Fig. 1]

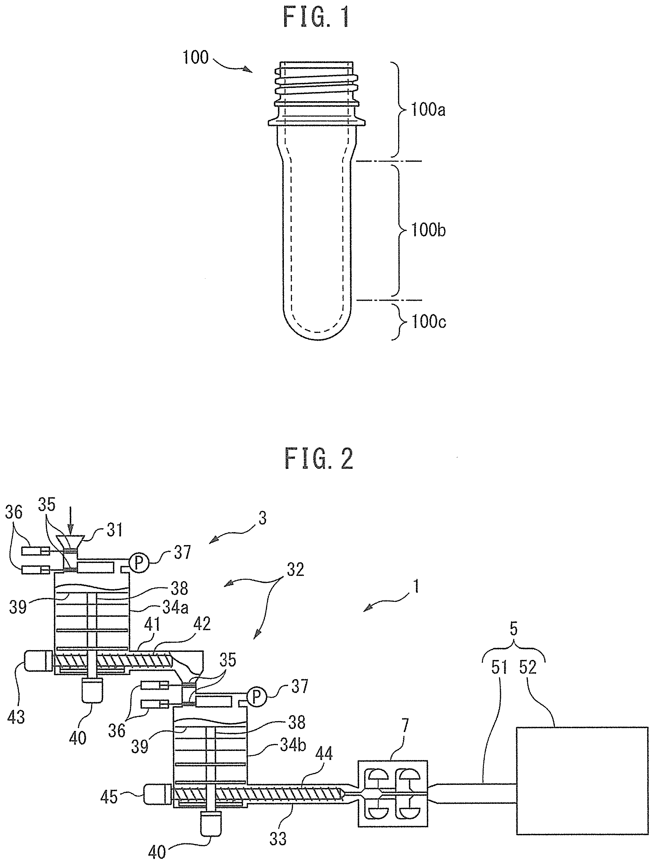

   FIG. 1 shows a preform for a plastic bottle.
[Fig. 2]
   FIG. 2 is a figure schematically showing a preform manufacturing device according to the embodiment of the present invention.
[Fig. 3]

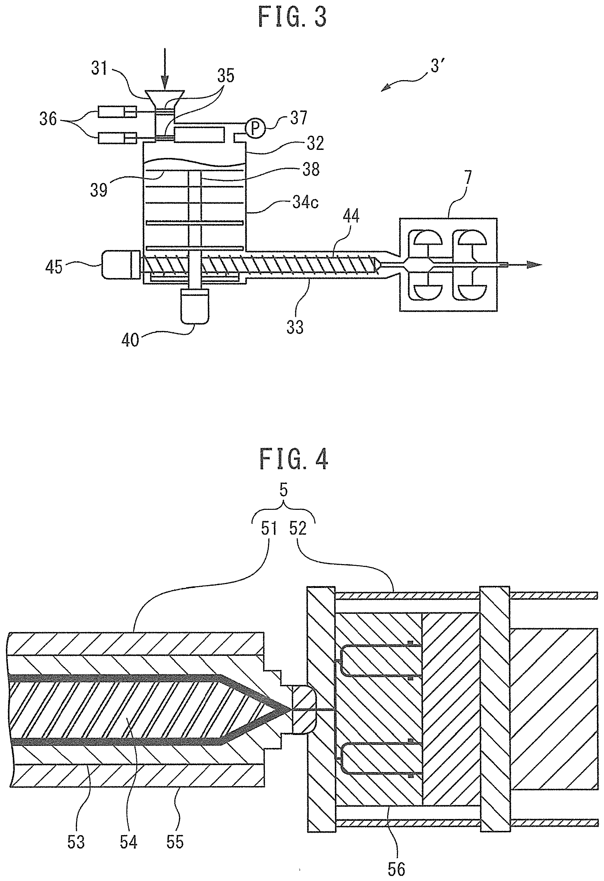

   FIG. 3 is a figure schematically showing another example of a decontamination apparatus according to the embodiment of the present invention.
[Fig. 4]
   FIG. 4 is a figure schematically showing an injection molding apparatus according to the embodiment of the invention.
[Fig. 5]

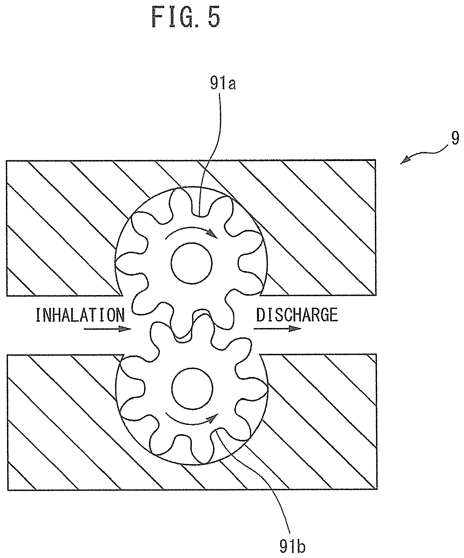

   FIG. 5 is a figure schematically showing a gear pump according to the embodiment of the invention.
[Fig. 6]

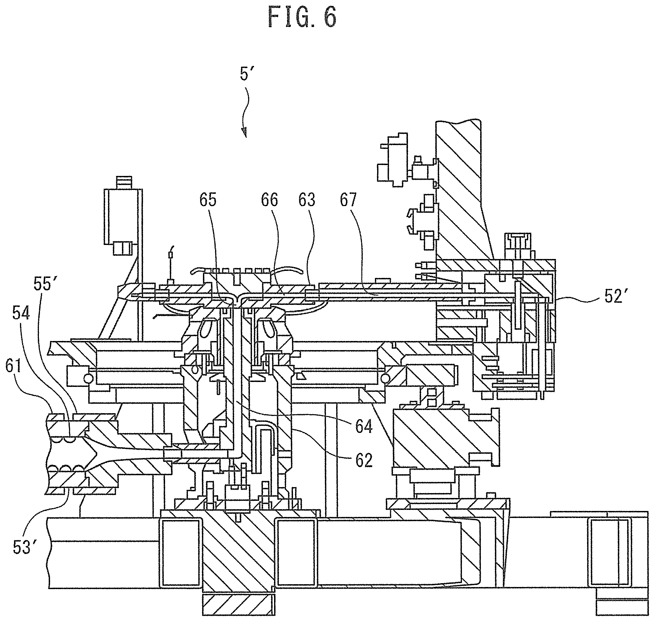

   FIG. 6 is a figure schematically showing another example of an injection molding apparatus according to the embodiment of the present invention.
[Fig. 7]

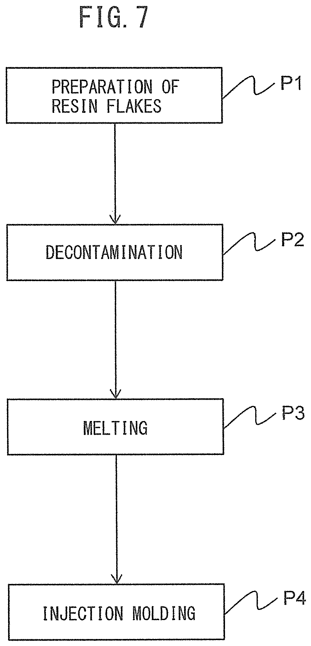

   FIG. 7 is a flowchart of a preform manufacturing process according to the embodiment of the present invention.
[Fig. 8]
   FIG. 8 is a flowchart of a preform manufacturing process in prior art.

### [Description of Embodiments]

Below, referring to the attached drawings, an embodiment of the present invention will be explained in detail. Further, in the blow explanation, the same components are assigned the same reference notations.

A plastic bottle used to contain liquid for drinking, food, etc., is shaped by blowing up a preform by a stretch blow molding method. Note that in the Description, a plastic bottle means a bottle made of plastics such as polyethylene terephthalate (PET), polypropylene (PP) and polyethylene (PE), and therefore it is not limited to a PET bottle. Further, the plastic bottle may be a Polyethylene naphthalate (PEN), a plant bottle partially made from plants, etc.

FIG. 1 shows a preform 100 for a plastic bottle. The preform 100 is composed of an inlet portion 100a fitting with a cap of a plastic bottle, a cylindrical body portion 100b adjacent to the inlet portion 100a, and a bottle portion 100c closing one end of the cylindrical body portion 100b, and has a shape such as a test tube. An external thread screwed with an internal thread of the cap of the plastic bottle is formed on the circumference surface of the inlet portion 100a. The end of the preform 100, which is positioned at the inlet portion 100a side, is opened.

The preform 100 is manufactured using injection molding apparatus typically from a virgin material made of an oil, etc., a recycled material made of a used plastic bottle, or a mixture of the virgin material and the recycled material. However, a used plastic bottle is often contaminated by impure substances. Therefore, if a recycled material is used, it is necessary to remove contaminations due to impure substances by a decontamination apparatus before introduction into the injection molding apparatus.

FIG. 2 is a figure schematically showing a preform manufacturing device 1 according to the embodiment of the present invention. The preform manufacturing device 1 manufactures a preform from a recycled material. The recycled material is a thermoplastic resin flake which is produced by shattering and washing a used plastic bottle, for example, a PET flake. The PET flake is a small piece of about 8mm square.

The preform manufacturing device 1 comprises a decontamination apparatus 3 and an injection molding apparatus 5. The decontamination apparatus 3 removes contaminations in thermoplastic resin flakes, and supplies the decontaminated thermoplastic resin to the injection molding apparatus 5. The injection molding apparatus 5 shapes a preform by injecting and molding the thermoplastic resin supplied from the decontamination apparatus 3. In the present embodiment, the preform manufacturing device 1 further comprises a filter 7 disposed between the decontamination apparatus 3 and the injection molding apparatus 5. The filter 7 is, for example, a screen mesh filter having holes of 32 *µ*m diameter, or a melt filter which removes foreign matter by rotating a cylindrical filter having holes of minimum 80 *µ*m diameter. Micro foreign matter in the thermoplastic resin can be removed by passing the melted thermoplastic resin extruded from the decontamination apparatus 3 through the filter 7.

The decontamination apparatus 3 has an inlet 31, a decontamination portion 32 and a supply portion 33. Thermoplastic resin flakes are introduced into the decontamination portion 32 from the inlet 31, and the thermoplastic resin decontaminated in the decontamination portion 32 is supplied to the injection molding apparatus 5 by the supply portion 33. In the present embodiment, the decontamination portion 32 has two decontamination containers 34a and 34b. The decontamination containers 34a and 34b have similar constructions. The upper ends of the decontamination containers 34a and 34b are provide with two slide valves 35, respectively. Each of the two slide valves 35 can be moved between an open position and a closed position by double-acting cylinders 36.

The decontamination containers 34a and 34b are connected to a vacuum pump 37, respectively. Therefore, the decontamination containers 34a and 34b are decompressed into a vacuum state by the vacuum pump 37. Further, a plurality of rotation members 39 connected to a rotation shaft 38 are located in the decontamination containers 34a and 34b. The rotation shaft 38 is driven to rotate by a rotation driving device 40. The thermoplastic resin introduced into the decontamination containers 34a and 34b is fluidized and heated by rotating the rotation members 39 by driving the rotation shaft 38. The decontamination apparatus 3 can volatilize and remove contaminations in the thermoplastic resin by heating the thermoplastic resin at a vacuum state. Accordingly, the decontamination apparatus 3 carries out a so-called mechanical recycle method.

The decontamination apparatus 3 has a transfer portion 41 between the decontamination container 34a and the decontamination container 34b. The thermoplastic resin decontaminated in the decontamination container 34a enters into the transfer portion 41 from a discharge port provided in the decontamination container 34a. A transfer screw 42 is disposed at the transfer portion 41. The transfer screw 42 is driven to rotate by a transfer screw driving device 43. The thermoplastic resin is moved from the decontamination container 34a to the decontamination container 34b by rotating the transfer screw 42. The thermoplastic resin moved to the decontamination container 34b is decontaminated again in the decontamination container 34b by a method similar to the decontamination container 34a. A supply screw 44 is disposed at the supply portion 33 disposed at the lower portion of the decontamination container 34b. The supply screw 44 is driven to rotate by a supply screw driving device 45. The supply portion 33 supplies the decontaminated thermoplastic resin to the injection molding apparatus 5 via the filter 7 by rotating supply screw 44.

The supply screw 44 melts the decontaminated thermoplastic resin. Therefore, the decontaminated thermoplastic resin at the molten state is supplied to the filter 7. Note that if the preform manufacturing device 1 is not provided with the filter 7 or if the injection molding apparatus 5 is provided with a filter, the supply screw 44 may be a transport screw supplying the decontaminated thermoplastic resin at the solid state to the injection molding apparatus 5.

The rotation shaft driving device 40, transfer screw driving device 43 and supply screw driving device 45 are, for example, electric motors. Note that the decontamination apparatus 3 may have a construction having only one decontamination container 34c, as shown in FIG.3 as a decontamination apparatus 3'. Further, the decontamination apparatus 3 is not limited to the construction mentioned above as long as it is configured to remove contaminations in thermoplastic resin flakes by a mechanical recycle method.

FIG. 4 is a figure schematically showing the injection molding apparatus 5 according to the embodiment of the present invention. As shown in FIGS. 2 and 4, the injection molding apparatus 5 has an injection portion 51 and a mold portion 52. The injection portion 51 includes a heating cylinder 53 and a plasticizing screw 54. A heater 55 is provided on the heating cylinder 53, and the heating cylinder 53 can heat the thermoplastic resin supplied to the injection portion 51 from the decontamination apparatus 3. The plasticizing screw 54 is driven to rotate by a plasticizing screw driving device (not shown) and can be moved in an axial direction of the plasticizing screw 54. The thermoplastic resin supplied to the injection portion 51 is plasticized by being heated by the heating cylinder 53 and a frictional force applied by the rotation of the plasticizing screw 54. The plasticizing screw driving device is, for example, a hydraulic cylinder, a hydraulic motor, an electric motor, or a combination thereof.

The plasticized resin is hold at the front side of the plasticizing screw 54 and is injected into cavities of a mold 56 of the mold portion 52 by advancing the plasticizing screw 54 in the axial direction. The plasticizing screw 54 advanced in the axial direction is shown in FIG. 4. The resin injected into the cavities is cooled and solidified. After that, the mold 56 is opened, and the shaped preform is ejected from the mold 56. In the example in FIG. 4, two preforms are shaped per one injection molding.

The plasticizing screw 54 is retracted in the axial direction after injecting the resin, and plasticizes the resin supplied from the decontamination apparatus 3 again by the rotation of the plasticizing screw 54. The plasticized resin is injected into the mold 56 again. Accordingly, the plasticizing screw 54 intermittently rotates in order to plasticize a resin, and the injection molding apparatus 5 intermittently shapes preforms. Therefore, the supply screw driving device 45 of the decontamination apparatus 3 drives the supply screw 44 so that a resin is supplied to the injection portion 51 so as to conform to the timing of the retraction of the plasticizing screw 54. In other word, the supply screw 44 is controlled so as to cooperate with plasticizing screw 54.

The preform manufacturing device 1 may further comprise a gear pump disposed between the filter 7 and the injection molding apparatus 5. FIG. 5 is a figure schematically showing a gear pump 9 according to the embodiment of the present invention. The gear pump 9 conveys a resin by oppositely rotating two gears 91a and 91b meshing each other. Any one of the gears 91a and 91b is driven to rotate by an electric motor. The gear pump 9 can control the amount of conveyed resin by controlling the rotation speed of gears 91a and 91b. Therefore, the amount of resin supplied from the decontamination apparatus 3 to injection molding apparatus 5 can be controlled. Accordingly, the gear pump 9 can supply a substantially constant amount of resin to the injection molding apparatus 5 by increasing the rotation speed of the gears 91a and 91b, even if the filter 7 is clogged.

FIG. 6 is a figure schematically showing another example of an injection molding apparatus according to the embodiment of the present invention. A injection molding apparatus 5' is a rotary type injection molding apparatus comprising a plurality of molds and a rotary mechanism rotating the plurality of molds, and can continuously shape preforms. The injection molding apparatus having such a construction is well known and disclosed in, for example, WO 2014/111902. Therefore, the construction of the injection molding apparatus 5' will be briefly explained in the Description.

The injection molding apparatus 5' has a extrusion portion 61, a resin conveying portion 62, a rotary mechanism 63 and a mold portion 52'. The extrusion portion 61 includes a heating cylinder 53' and a plasticizing screw 54'. The heating cylinder 53' is provided with a heater 55' and can heat the thermoplastic resin supplied from the decontamination apparatus 3 to extrusion portion 61. The plasticizing screw 54' is driven to rotate by a plasticizing screw driving device (not shown). The thermoplastic resin supplied to the extrusion portion 61 is plasticized by being heated by the heating cylinder 53' and a frictional force applied by the rotation of the plasticizing screw 54'. Further, the resin supplied to the extrusion portion 61 is extruded to the resin conveying portion 62 by the rotation of the plasticizing screw 54'. The plasticizing screw driving device is, for example, an electrical motor.

A conveying passage 64 is formed in the resin conveying portion 62. The resin extruded to the resin conveying portion 62 is conveyed to a resin distribution portion 65 of the rotary mechanism 63 through the conveying passage 64. The rotary mechanism 63 is rotatably connected to the resin conveying portion 62 via a rotary joint. The central axis of the conveying passage 64 is coaxial with the rotational axis of the rotary mechanism 63. The resin distribution portion 65 is connected to a plurality of first radial passages 66. Accordingly, the resin conveyed to the resin distribution portion 65 is distributed to the plurality of first radial passages 66 via the resin distribution portion 65. The plurality of first radial passages 66 are connected to a second radial passage 67, respectively. The resin distributed to the first radial passage 66 is supplied into cavities of molds formed in the mold portion 52' through the first radial passages 66 and the second radial passages 67.

The resin supplied into the cavities is cooled and solidified. After that, the molds are opened, and the shaped preforms are ejected from the molds. The injection molding apparatus 5' has molds continuously disposed in the circumference direction, and the number of the molds is, for example, 144. In the injection molding apparatus 5', the plurality of molds continuously rotates with the rotary mechanism 63, and therefore a preform shaped in each mold is continuously ejected at the same position in the circumference direction.

In the injection molding apparatus 5', the plasticizing screw 54' continuously rotates during shaping preforms, and thereby it continuously plasticizes the resin supplied to extrusion portion 61 and extrudes it to the resin conveying portion 62. In this case, the supply screw 44 of the decontamination apparatus 3 is continuously driven to rotate in order to continuously supply the resin to the extrusion portion 61, and therefore the processing ability of the decontamination apparatus 3 is not suppressed. Accordingly, productivity of a preform in the recycle process can be further enhanced by combining the decontamination apparatus 3 and the injection molding apparatus 5'. Note that the injection molding apparatus 5' is not limited to the construction mentioned above as long as it is configured to continuously shape preforms by continuously rotating the plasticizing screw 54'

Below, a preform manufacturing method in the present embodiment will be explained. FIG. 7 is a flowchart of a preform manufacturing process according to the embodiment of the present invention. In a step P1, resin flakes are prepared. The resin flakes are produced by shattering and washing a used plastic bottle. The resin flakes are thermoplastic resin flakes, for example, PET flakes. In a step P2, the resin flakes are decontaminated at high temperature by the decontamination apparatus 3. In a step P3, the decontaminated resin is melted. The resin is melted by the supply screw 44 of the decontamination apparatus 3 and is supplied to the plasticizing screw 54 of the injection molding apparatus 5 or the plasticizing screw 54' of the injection molding apparatus 5'. Accordingly, in the present embodiment, the decontaminated resin is directly supplied from the decontamination apparatus 3 injection molding apparatus 5 or 5'. Further, the melted resin is passed through the filter 7 before being supplied to the plasticizing screw 54 or 54', and thereby foreign matter in the resin are removed. The resin supplied to the plasticizing screw 54 or 54' is kept melted, i.e., plasticized by the plasticizing screw 54 or 54'. In a step of P4, a preform is manufactured by injecting and molding the plasticized resin with the injection molding apparatus 5 or 5'.

Note that if foreign matter in the resin is not removed by the filter 7 or if foreign matter in the resin is removed by a filter provided in the injection molding apparatus 5 or 5', the supply screw 44 may supply the decontaminated resin at the solid state to the injection molding apparatus 5 or 5'.

According to the present embodiment, the preform manufacturing process can be drastically shortened, compared to the preform manufacturing process in prior art, which is shown in FIG. 8. Therefore, it is possible to enhance productivity of a preform in a recycle process of a plastic bottle, wherein a mechanical recycle method is used. Further, according to the present embodiment, the number of heating or cooling a resin which is a material of a preform can be reduced, compared to the preform manufacturing process in prior art, which is shown in FIG. 8. Therefore, thermal load on a resin is reduced, and thereby quality of a preform manufactured from a recycled material, and therefore quality of a plastic bottle manufactured from a recycled material can be enhanced.

Above, the preferred embodiments according to the present invention were explained, but the present invention is not limited to these embodiments. Various modifications and changes may be made within the scope of the claims. For example, the plasticizing screw 54 of the injection molding apparatus 5 or the plasticizing screw 54' of injection molding apparatus 5' and the supply screw 44 of decontamination apparatus 3 may be integrated into one piece and be driven by one driving device. Further, if the molten state of the resin melted by the supply screw 44 is maintained in the injection portion 51 of the injection molding apparatus 5, the injection portion 51 may not be provided with the heating cylinder 53 and the heater 55. Similarly, if the molten state of the resin melted by the supply screw 44 is maintained in the extrusion portion 61 of the injection molding apparatus 5', the extrusion portion 51 may not be provided with the heating cylinder 53' and the heater 55'.

### [Reference Signs List]

1. preform manufacturing device
3. decontamination apparatus
5, 5'. injection molding apparatus
7. filter
9. gear pump
44. supply screw
54, 54'. plasticizing screw
100. preform

## Claims

1. A preform manufacturing device (1) for manufacturing a preform from thermoplastic resin flakes, the preform manufacturing device (1) comprises:
a decontamination apparatus (3) removing contaminants in the thermoplastic resin flakes, and
an injection molding apparatus (5") injecting and molding the thermoplastic resin supplied from the decontamination apparatus (3), and the injection molding apparatus (5') comprises a plurality of molds and continuously shapes preforms;
the preform manufacturing device further comprising a filter (7) disposed between the decontamination apparatus (3) and the injection molding apparatus (5'), **characterized in that** a gear pump (9) is disposed between the filter (7) and the injection molding apparatus (5').

2. The preform manufacturing device (1) according to claim 1, wherein the injection molding apparatus (5') is a rotary type injection molding apparatus comprising a rotary mechanism rotating the plurality of molds.

## Patentansprüche

1. Vorformling-Herstellungsvorrichtung (1) zum Herstellen eines Vorformlings aus thermoplastischen Harzflocken, wobei die Vorformling-Herstellungsvorrichtung (1) umfasst:
eine Dekontaminationsvorrichtung (3), die Verunreinigungen in den thermoplastischen Harzflocken entfernt, und
eine Spritzgussvorrichtung (5), die das von der Dekontaminationsvorrichtung (3) zugeführte thermoplastische Harz einspritzt und formt, wobei die Spritzgussvorrichtung (5') eine Vielzahl von Formen umfasst und kontinuierlich Vorformlinge formt;
die Vorformling-Herstellungsvorrichtung umfasst ferner einen Filter (7), der zwischen der Dekontaminationsvorrichtung (3) und der Spritzgussvorrichtung (5') angeordnet ist, **dadurch gekennzeichnet, dass** eine Zahnradpumpe (9) zwischen dem Filter (7) und der Spritzgussvorrichtung (5') angeordnet ist.

2. Vorformling-Herstellungsvorrichtung (1) nach Anspruch 1, wobei die Spritzgussvorrichtung (5') eine Rotations-Spritzgussvorrichtung ist, die einen Rotationsmechanismus umfasst, der die Vielzahl von Formen dreht.

## Revendications

1. Un dispositif de fabrication de préforme (1) pour fabriquer une préforme à partir de flocons de résine thermoplastique, le dispositif de fabrication de préforme (1) comprend:
un appareil de décontamination (3) éliminant les contaminants se trouvant parmi les flocons de résine thermoplastique, et un appareil de moulage par injection (5") pour injecter et mouler la résine thermoplastique fournie par l'appareil de décontamination (3), et l'appareil de moulage par injection (5') comprend une pluralité de moules pour former des préformes en continu; le dispositif de fabrication de préformes comprenant en outre un filtre (7) disposé entre l'appareil de décontamination (3) et l'appareil de moulage par injection (5'), **caractérisé en ce qu'**une pompe à engrenages (9) est disposée entre le filtre (7) et l'appareil de moulage par injection (5').

2. Le dispositif de fabrication de préformes (1) selon la revendication 1, dans lequel l'appareil de moulage par injection (5') est un appareil de moulage par injection de type rotatif comprenant un mécanisme de rotation pour faire tourner la pluralité de moules.
